Europäisches Patentamt

European Patent Office

Office européen des brevets

(19)

(11) Publication number: **0 146 214**
A1

(12) # EUROPEAN PATENT APPLICATION

(21) Application number: 84306421.3

(22) Date of filing: 20.09.84

(51) Int. Cl.⁴: **G 01 S 13/44**, G 01 S 7/28, G 01 S 7/02

(30) Priority: 20.09.83 GB 8325114
24.08.84 GB 8421459

(43) Date of publication of application: 26.06.85
Bulletin 85/26

(84) Designated Contracting States: **AT BE CH DE FR IT LI LU NL SE**

(71) Applicant: **THE MARCONI COMPANY LIMITED, The Grove Warren Lane, Stanmore Middlesex HA7 4LY (GB)**

(72) Inventor: **Herbert, Maurice Charles, The Olives Prinsted, Emsworth Hampshire (GB)**

(74) Representative: **Keppler, William Patrick, Central Patent Department Wembley Office The General Electric Company, p.l.c. Hirst Research Centre East Lane, Wembley Middlesex HA9 7PP (GB)**

(54) **Radar receiving circuits.**

(57) A lightweight monopulse radar receiver is provided with means (1, 1') for modulating the azimuth and elevation difference signals ($\Delta x$, $\Delta y$) and adding the modulated difference signals to the azimuth sum ($\varepsilon x$) and elevation sum ($\varepsilon y$) signals respectively. The resulting signals ($\varepsilon x \pm \Delta x$, $\varepsilon y \pm \Delta y$) are downconverted and detected separately to give azimuth and elevation error signals. Any channel mismatch (in gain or phase) does not affect the azimuth and elevation error signals because all the azimuth (or elevation) information is contained in the modulated summed azimuth (or elevation) signal. Consequently the construction is simplified and excessive multiplexing of signals is avoided.

0146214

SDL/2258/EPC

-1-

## Radar receiving circuits

The present invention relates to multi-channel radar receiving circuit arrangements, and is particularly but not exclusively concerned with monopulse receivers. Multi-channel radar receivers process three or more sum and difference signals from a receiving antenna to derive two signals which represent the deviation of a target from the antenna boresight in the azimuth and elevation directions respectively. It is normally necessary to preserve the relative amplitudes and phases of the sum and difference signals throughout the radar receiver in order to correctly derive the required azimuth and elevation information. In general, this has been achieved either by time-multiplexing the various sum and difference signals, thereby subjecting them to the same channel distortions but reducing their power and increasing the noise figure of the receiver, or by providing accurately matched individual channels for the signals prior to the amplification stages of the receiver, thereby increasing the weight of the receiver and creating a need for frequent re-alignment of the channels. A further disadvantage of radar receivers which individually multiplex the various sum and difference signals is that the phase and frequency of the or each sum signal have to be stored whilst the corresponding difference signal is being processed. Approximation and other errors are inevitably introduced as a result.

The problems outlined above become more acute when the antenna signals are fed to the receiver via a mode coupler rather than a conventional four-horn static split feed. Use of a mode coupler enables the size of the antenna to be reduced, but since a mode coupler generates four signals (namely azimuth sum $\Sigma x$ and difference $\Delta x$, and elevation sum $\Sigma y$ and difference $\Delta y$) whereas a four-horn static split feed generates three, the associated multiplexing loss is increased from 4.7 dB to 6dB. Four channel receivers fed by mode couplers have not been used because of the problems of channel matching and excessive weight referred to above.

An object of the present invention is to provide a radar receiver with a low noise figure in which accurate channel matching is not required.

A further object of the invention is to provide a lightweight radar receiver suitable for use with a mode coupler.

According to the present invention, a radar receiver comprises antenna signal feed means for generating an azimuth sum signal, an azimuth difference signal, an elevation sum signal and an elevation difference signal in response to a detected target, modulating means for modulating said difference signals, first summing means for summing the modulated azimuth difference signal and the azimuth sum signal to generate a modulated azimuth sum signal, second summing means for summing the modulated elevation difference signal and the elevation sum signal to generate a modulated elevation sum signal, coherent detector means fed with said modulated azimuth and elevation sum signals for measuring the relative phase or amplitude of each said difference signal with respect to its associated azimuth or elevation sum signal and demodulator means to generate output signals representative of the azimuth and elevation of the target respectively.

-3-

The antenna signal feed means may be a mode coupler. Alternatively the antenna signal feed means may comprise a static-split feed system and a power divider (such as a hybrid coupler) arramged to split the single sum signal from the static-split feed system into an azimuth sum signal and an elevation sum signal.

The radar receiver may be of the phase comparison type (in which the phase of each difference signal from said feed means with respect to its associated sum signal indicates the position of the target), or of the amplitude comparison type (in which the amplitude of each differennce signal relative to its associated sum signal indicates the position of the target.

Said coherent detector means may comprise one or more phase-locked loops each of which filters out the modulation frequency.

The modulated azimuth and elevation sum signals are suitably multiplexed and fed alternately to a common coherent detector means. The modulated sum signals may be multiplexed prior to downconversion, subsequent to downconversion, or at any intermediate stage in a multiple (frequency) conversion system.

The radar receiver of the invention may be used in conjunction either with a C.W. radar transmitter or with a pulsed radar transmitter. In the latter case the modulated elevation sum signal and the modulated azimuth sum signal may be multiplexed, one of these signals being delayed by a delay line for the duration of the other multiplexed pulse before being fed to the multiplexer.

The advantages of the invention will become clearer on consideration of Figures 1 to 5 of the accompanying drawings, of which:

Figure 1 is a schematic block diagram illustrating by way of example one radar receiver in accordance with the invention and suitable for use in a C.W. radar system;

Figure 2 is a schematic block diagram illustrating the demodulating circuitry of the receiver of Figure 1;

Figure 3 is a timing diagram for the demodulating circuitry of Figure 2;

Figure 4 is a schematic block diagram illustrating another radar receiver in accordance with the invention and suitable for use in a C.W. radar system, and

Figure 5 is a schematic block diagram illustrating a radar receiver in accordance with the invention suitable for use in a pulsed radar system. Similar parts are designated by common reference numerals throughout the drawings.

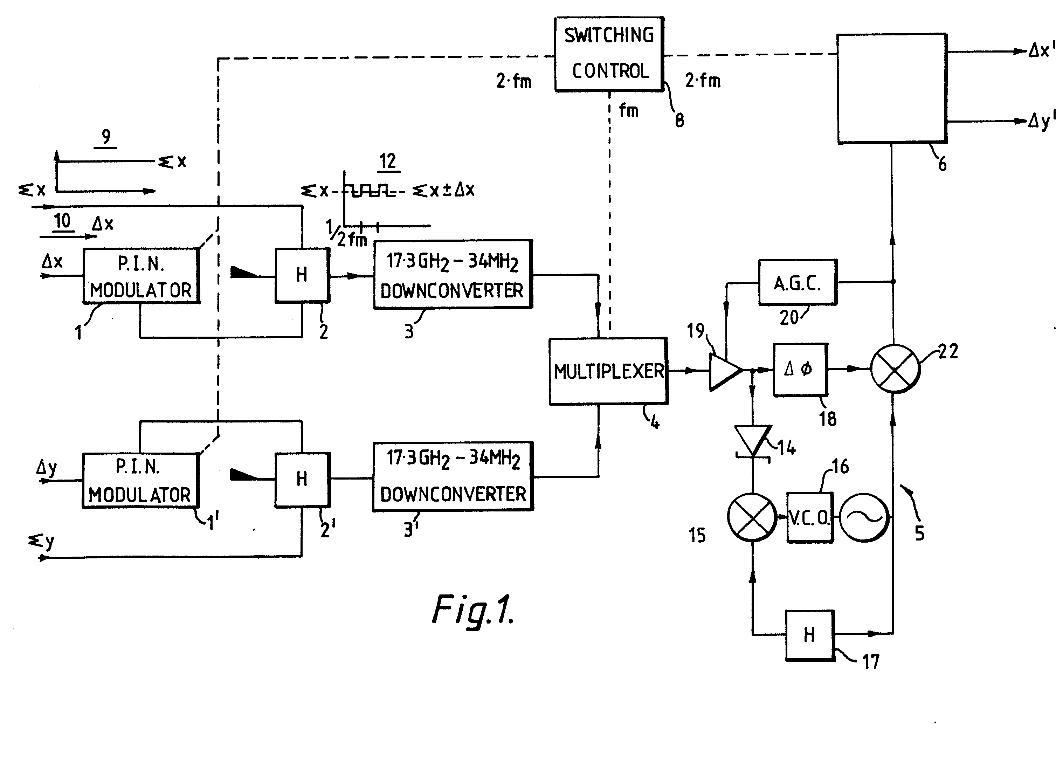

The amplitude-comparison monopulse radar receiver shown in Figure 1 is provided with four microwave inputs $\Sigma x$, $\Delta x$, $\Delta y$ and $\Sigma y$ fed from a mode coupler (not shown) which respectively feed azimuth sum, azimuth difference, elevation difference and elevation sum signals from the antenna (not shown) to the receiver. The azimuth signals are processed by a first channel comprising P.I.N. modulator 1 (which acts as a $180^{\circ}$ phase shifter and is switched at low frequency), hybrid coupler 2 and downconverter 3 (which incorporates a local oscillator and mixer), and the elevation signals are processed by a second, similar channel comprising P.I.N. modulator 1', hybrid coupler 2' and downconverter 3'. The channels are combined in a multiplexer 4 and the resulting multiplexed signal is processed in a coherent detector 5. The multiplexed output from coherent detector 5 alternately represents the amplitude difference between a) the $\Sigma x$ and $\Delta x$ signals and b) the $\Sigma y$ and $\Delta y$ signals and is demultiplexed by multiplexer 6 to give separate normalised azimuth and elevation error signals $\Delta x'$ and $\Delta y'$. These error signals indicate the deviation from the antenna boresight of the detected target and can be used to steer the antenna towards the target by means of standard servo-control arrangements (not shown). P.I.N. modulators 1 and 1', multiplexer 4 and multiplexer 6 are switched by a common switching control at frequencies $2f_M$, $f_M$ and $f_M$ respectively.

The operation of the receiver is as follows. The phase of the azimuth difference signal $\Delta x$ (waveform 10) is periodically shifted (typically at a frequency of 5kH$_z$)by $180^\circ$ by P.I.N. Modulation 1 and is summed with the azimuth sum signal $\Sigma x$ (waveform 9) by hybrid coupler 2. The resulting modulated azimuth sum signal (waveform 12) is downconverted (typically from 17.3 GHz to 34 MHz) by downconverter 3. The down-converted modulated azimuth sum signal is multiplexed with a similar down-converted modulated elevation sum signal in multiplexer 4, which outputs one period of each signal alternately to coherent detector 5. It will be appreciated that the information on the target azimuth is contained in the amplitude of the $\Delta x$ signal relative to that of the $\Sigma x$ signal and that information on the target elevation is contained in the amplitude of the $\Delta y$ signal relative to the $\Sigma y$ signal. This information is initially at microwave frequency and is preserved at radio frequency when waveform 12 is downconverted by downconverter 3. It will be apparent that any phase or gain mismatch between the azimuth and elevation channels will not affect this information, since each $\Sigma$ signal will be affected in precisely the same way as its associated $\Delta$ signal. Multi-plexer 4 introduces a 3dB decrease in power which may affect the signal-to-noise ratio of the receiver. However any increase in noise figure (potentially 3dB) is much less than the potential 6dB increase in noise figure which could result from multiplexing all four $\Sigma$ and $\Delta$ signals. If necessary the downconverted signals may be amplified before being multiplexed.

Coherent detector 5 is fed from a gain-controlled amplifier 19 and initially splits the incoming signal into two paths which are subsequently recombined as the inputs to a phase-sensitive detector 22. The first path comprises a limiting amplifier 14, a double-balanced mixer 15 and a quadrature hybrid coupler 17. Limiting amplifier 14 clips the incoming signal and feeds it to mixer 15 which generates an output proportional to the difference between its input frequencies. This output is fed to a voltage-controlled oscillator 16 which feeds the other input of the mixer 15 via a hybrid coupler 17. The output signal of the oscillator 16 (which has a constant amplitude) locks on to the input signal from amplifier 14, with the result that the output signal from the voltage-controlled oscillator has the same frequency as, but is advanced in phase by $90^{\circ}$ relative to, the signal from limiting amplifier 14. The output from hybrid coupler 17 to detector 22 is further advanced in phase by $90^{\circ}$. The filter action of the phase-locked loop ensures that this output is unmodulated.

The other path from amplifier 19 to detector 22 consists simply of a delay line 18, which shifts the phase of the $\Sigma \pm \Delta$ signals to compensate for the phase shift introduced by limited amplifier 14. As a result, the phase-sensitive detector 22 is fed at this input with modulated $\Sigma + \Delta$ signals which are $180^{\circ}$ out of phase with a constant amplitude signal of the same frequency which is fed to the other input. The output of phase-sensitive detector 22 consists of alternate x and y error envelopes, each of which is made up of two components, namely 1) a D.C. level whose magnitude is dependent upon the magnitude of the appropriate x or y sum signal and 2) a 5kHz error envelope whose amplitude is proportional to the product of the appropriate $\Delta$ x or $\Delta$ y signal and the cosine (either +1 or -1)of the phase difference between the corresponding $\Delta$ and $\Sigma$ input signals. The D.C. level controls the fast-acting A.G.C. loop which in turn normalises the 5kHz error envelope to the appropriate x or y sum signal amplitude. Thus demodulator 6 generates azimuth and elevation error signals $\Delta$ x' and $\Delta$y' which are normalised relative to the amplitudes of the $\Sigma$ x and of $\Sigma$ y signals respectively.

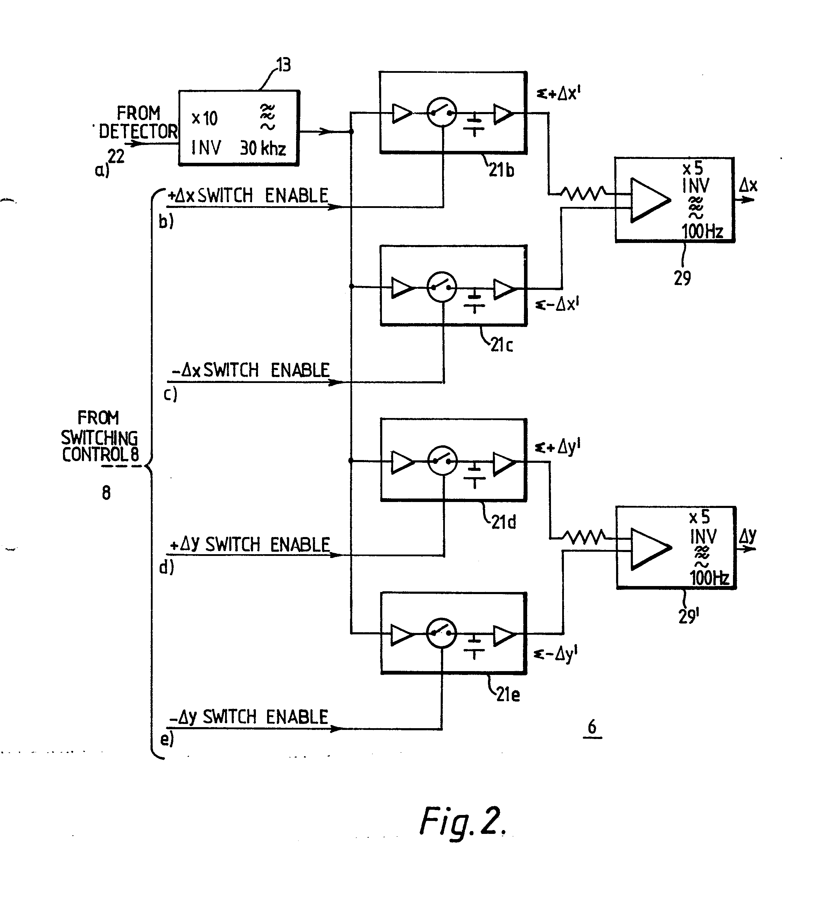

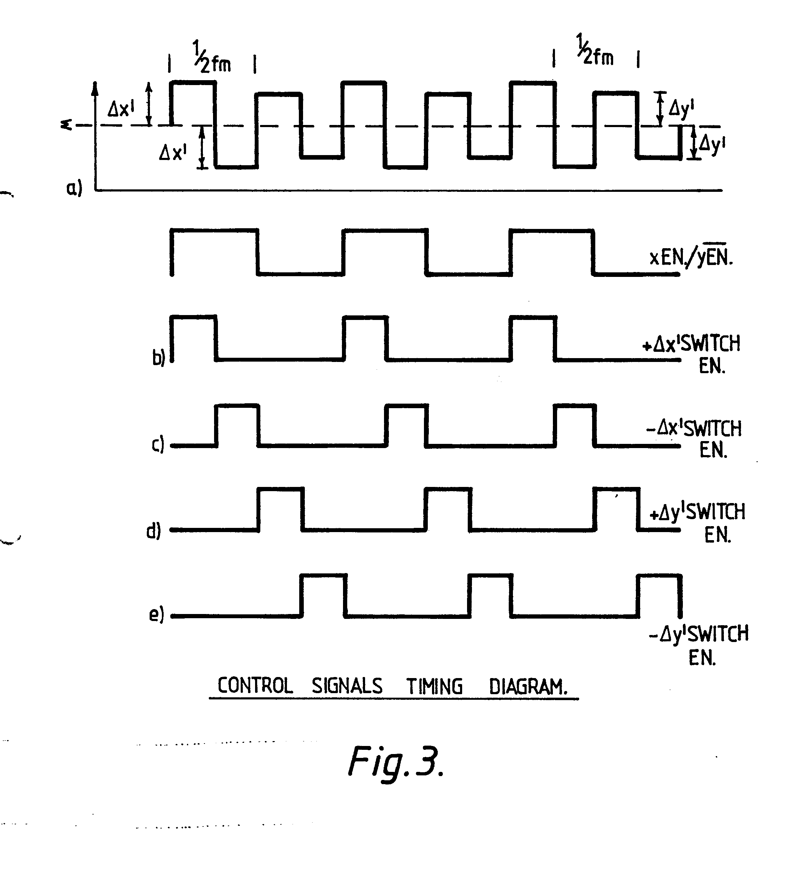

Figure 2 shows in more detail the demodulator 6 and Figure 3 shows the corresponding timing diagram, waveform a) (Figure 3) being the waveform of the output from detector 22. Waveform a) is fed to an inverting amplifier 13 which has a voltage gain of 10 and includes a 30kHz low pass-filter. The amplified signal is then fed to four sample-and-hold switching circuits 21b, 21c, 21d and 21e. These are switched in accordance with timing signals b), c), d) and e) respectively from switching control 8, so that circuits 21 b), c), d) and e) store levels $\Sigma+\Delta x'$, $\Sigma-\Delta x'$, $\Sigma+\Delta y'$ and $\Sigma-\Delta y'$ respectively. The pairs of $\Sigma+\Delta$ and $\Sigma-\Delta$ levels are added in inverting amplifiers 29 and 29' (which have voltage gains of 5 and include 100 Hz low pass filters) to give azimuth and elevation error signals $\Delta x'$ and $\Delta y'$ respectively which are normalised with respect to the corresponding $\Sigma x$ and $\Sigma y$ signals.

It will be appreciated the receiver of Figure 1 may be adapted for use in a phase-comparison monopulse system by suitably adapting coherent detector 5. Thus the amplitudes of both inputs to phase-sensitive detector 25 could be held constant and arranged to be approximately $90^{\circ}$ out of phase. The output of detector 22 would then be sensitive to the relative phases of the $\Sigma$ and $\Delta$ signals.

In the receiver of Figure 1 it is necessary that the amplitude of the modulated difference signal should be less than that of the sum signal. If necessary switchable attenuators (not shown) may be provided to ensure that this condition applies.

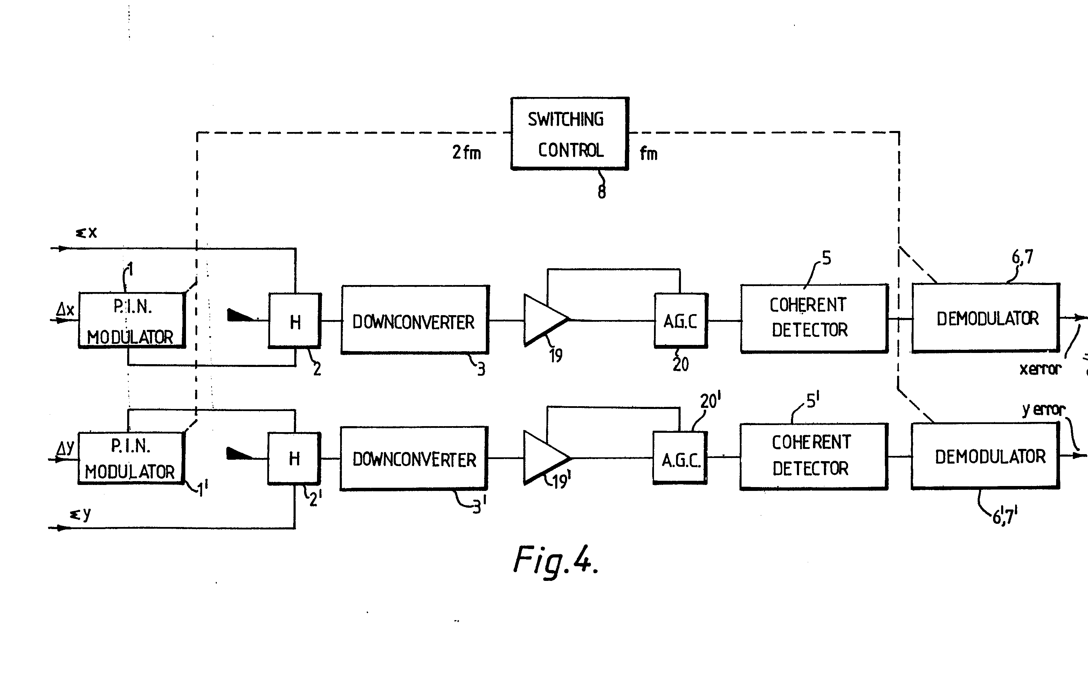

Figure 4 shows in a simplified form a similar receiver to that shown in Figure 1. However multiplexing losses are avoided by processing the x and y signals separately throughout. As in Figure 1 P.I.N. modulators 1 and 1' periodically phase shift the $\Delta$ signals at a frequency $f_M$ (of the order of 5 kHz) and feed $\Sigma+\Delta$ signals through downconverters 3, 3' to A.G.C. amplifiers 19, 19' to coherent detectors 5, 5' which operate in a similar way to that shown in Figure 1.

-7a-

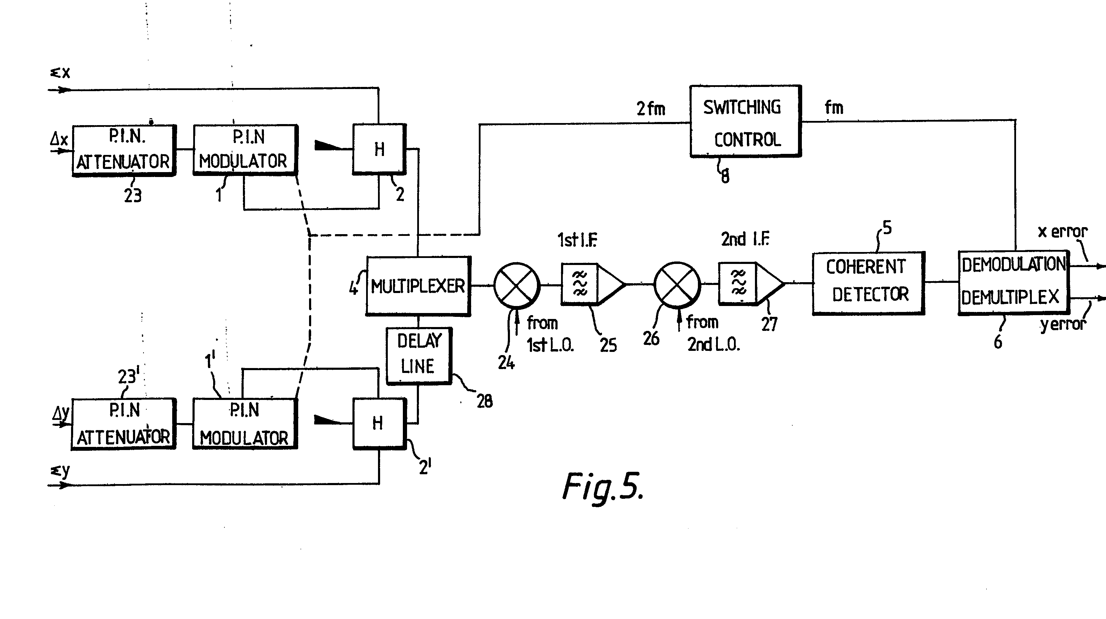

The receiver shown in Figure 5 is suitable for use in a pulsed radar system. P.I.N. attenuators 23 and 23' prevent the $\Delta$ signals from becoming larger than the $\Sigma$ signals (which could occur if a target was detected at a large angle off boresight), and causing the phase-locked loop in coherent detector 5 to lock onto the $\Delta$ signals rather than the $\Sigma$ signals. Delay line 28 brings the $\Sigma y + \Delta y$ signal pulses into synchronism with the $\Sigma x + \Delta x$ signal pulses. These pulses are then multiplexed as in Figure 1 and downconverted in two stages via mixers 24 and 26 and filters 25 and 27 before being demultiplexed and demodulated. It will be apparent that the $\Sigma + \Delta$ signals could alternatively be multiplexed at any stage within the downconversion chain prior to detection.

CLAIMS

1. A radar receiver comprising antenna signal feed means for generating azimuth sum ($\Sigma x$), azimuth difference ($\Delta x$), elevation sum ($\Sigma y$) and elevation difference ($\Delta y$) signals in response to a detected target, <u>characterised by</u> modulating means (1,1') for modulating said azimuth and elevation difference signals, first summing means (2) for summing the modulated azimuth difference signal with the azimuth sum signal to generate a modulated azimuth sum signal ($\Sigma x^{\pm}\Delta x$), second summing means (2') for summing the modulated elevation difference signal with the elevation sum signal to generate a modulated elevation sum signal ($\Sigma y^{\pm}\Delta y$) coherent detector means (5) arranged to be fed with said modulated azimuth and elevation sum signals so as to compare the relative phase or amplitude of each said difference signal ($\Delta x, \Delta y$) with that of its associated azimuth or elevation sum signal ($\Sigma x, \Sigma y$) and demodulator means (Fig. 2) coupled to said coherent detector means and arranged to generate output signals representative of the azimuth and elevation of the target respectively.

2. A radar receiver as claimed in Claim 1 wherein said modulating means (1,1') periodically phase-shifts said azimuth and elevation difference signals ($\Delta x, \Delta y$) by 180°.

3. A radar receiver as claimed in Claim 1 or Claim 2 wherein said antenna signal feed means is a mode coupler.

4. A radar receiver as claimed in any preceding Claim wherein said coherent detector means comprises one or more phase-locked loops (5) arranged to filter onto the modulation frequency from said modulated azimuth and elevation sum signals ($\Sigma x^{\pm}\Delta x, \Sigma y^{\pm}\Delta y$).

5. A radar receiver as claimed in any preceding Claim wherein said modulated azimuth and elevation sum signals ($\Sigma x^{\pm}\Delta x, \Sigma y^{\pm}\Delta y$) are multiplexed and fed alternately to a common coherent detector means (5).

6. A radar receiver as claimed in Claim 5 wherein said modulated azimuth and elevation sum signals ($\Sigma x^{\pm}\Delta x, \Sigma y^{\pm}\Delta y$) are down-converted before being multiplexed.

7.   A radar receiver as claimed in any preceding Claim wherein the relative amplitudes of the sum ($\Sigma x, \Sigma y$) and difference signals ($\Delta x, \Delta y$) are indicative of the target bearing.

8.   A radar receiver as claimed in any of Claim 1 to 6 wherein the relative phases of said sum ($\Sigma x, \Sigma y$) and difference ($\Delta x, \Delta y$) signals are indicative of the target bearing.

9.   A continuous wave (C.W.) radar system incorporating a radar receiver as claimed in any preceding Claim.

10.   A monopulse radar system incorporating a radar receiver as claimed in any of Claims 1 to 8.

Fig.1.

Fig.2.

0146214

CONTROL SIGNALS TIMING DIAGRAM.

*Fig.3.*

*Fig.4.*

0146214

Fig.5.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 570 251 (TRW INC.)  * Figure 1; page 1, lines 1-34; page 2, line 3 - page 4, line 7; page 5, line 37 - page 6, line 13 * | 1,2,4, 8-10 | G 01 S 13/44 G 01 S 7/28 G 01 S 7/02 |
| Y | | 5-7 | |
| Y | US-A-3 713 155 (R.M. JAFFE)  * Figures 1,2; column 1, line 1 - column 2, line 57; column 3, line 4 - column 8, line 63; column 13, lines 23-52 * | 5-7 | |
| A | US-A-4 065 771 (J.F. GULICK et al.) | | |
| A | US-A-4 011 564 (J.F. GULICK Jr.) | | TECHNICAL FIELDS SEARCHED (Int. Cl.4)  G 01 S |
| A | US-A-3 339 199 (S.H. PICHAFROY) | | |
| A | US-A-2 995 750 (D.R. HOLCOMB et al.) | | |

The present search report has been drawn up for all claims

| Place of search | Date of completion of the search | Examiner |
|---|---|---|
| THE HAGUE | 22-11-1984 | CANNARD J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82